(19) Europäisches Patentamt
European Patent Office
Office européen des brevets

(11) EP 4 641 546 A1

(12) EUROPEAN PATENT APPLICATION

(43) Date of publication:
29.10.2025 Bulletin 2025/44

(21) Application number: 25167900.7

(22) Date of filing: 02.04.2025

(51) International Patent Classification (IPC):
$G09C\ 1/00^{(2006.01)}$     $H04L\ 9/30^{(2006.01)}$

(52) Cooperative Patent Classification (CPC):
G09C 1/00; H04L 9/3093; H04L 2209/122

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 11.04.2024 US 202418632746

(71) Applicant: Microsoft Technology Licensing, LLC
Redmond, WA 98052 (US)

(72) Inventors:
• BISHEH NIASAR, Mojtaba
  Redmond, 98052 (US)
• KELLY, Bryan David
  Redmond, 98052 (US)
• PILLILLI, Bharat S
  Redmond, 98052 (US)

(74) Representative: CMS Cameron McKenna Nabarro
Olswang LLP
Cannon Place
78 Cannon Street
London EC4N 6AF (GB)

(54) **CRYPTOGRAPHIC SYSTEM PIPELINED NUMBER THEORETIC TRANSFORM ACCELERATOR**

(57)     A cryptographic accelerator utilizes a combination of parallel and pipelined butterfly operator circuit to perform number theoretic transform (NTT) or inverse NTT (INTT.) The accelerator includes a first set of pipelined pairs of parallel butterfly operator circuits configured to operate on pairs of polynomial coefficients to provide output coefficients. A first buffer is coupled to store the output coefficients. A second set of pipelined pairs of parallel butterfly operator circuits are configured to operation on pairs of coefficients obtained from the first buffer to provide coefficients of the polynomial in a number theoretic transform (NTT) domain or out of the NTT domain.

FIG. 6

EP 4 641 546 A1

**Description**

**BACKGROUND**

The advent of quantum computers poses a serious challenge to the security of the existing public-key cryptosystems, as they can potentially be broken based on Shor's algorithm. Lattice-based cryptosystems are among the most promising PQC algorithms that are believed to be hard for both classical and quantum computers.

Number Theoretic Transform (NTT) and inverse Number Theoretic Transform (INTT) are used to achieve more efficient polynomial multiplication in lattice-based cryptosystems by reducing time-complexity from $O(n^2)$ to $O(n\ log\ n)$.

Different designs to accelerate NTT computations include the use of pipelined architectures and parallel architectures. Pipelined architectures increase circuitry area required to implement them due to data dependencies between NTT stages. Parallel architectures can adversely increase memory access overhead for providing polynomial coefficients for execution.

**SUMMARY**

A cryptographic accelerator utilizes a combination of parallel and pipelined butterfly operator circuit to perform number theoretic transform (NTT) or inverse NTT (INTT.) The accelerator includes a first set of pipelined pairs of parallel butterfly operator circuits configured to operate on pairs of polynomial coefficients to provide output coefficients. A first buffer is coupled to store the output coefficients. A second set of pipelined pairs of parallel butterfly operator circuits are configured to operation on pairs of coefficients obtained from the first buffer to provide coefficients of the polynomial in a number theoretic transform (NTT) domain or out of the NTT domain.

**BRIEF DESCRIPTION OF THE DRAWINGS**

FIG. 1 is a conceptual circuit diagram of a Cooley-Tukey (CT) butterfly operator circuit according to an example embodiment.

FIG. 2 is a conceptual circuit diagram of a Gentleman-Sande (GS) butterfly operator circuit according to an example embodiment.

FIG. 3 illustrates is a circuit diagram of a general purpose butterfly operator circuit according to an example embodiment.

FIG. 4 is a diagram illustrating data flow via stages generally at for an NTT computation of a portion of an example 16 point or coefficient polynomial using CT butterfly operations according to an example embodiment.

FIG. 5 is a complete data flow diagram according to an example embodiment.

FIG. 6 is a diagram of an NTT/INTT circuit for a 16-coefficient polynomial according to an example embodiment.

FIG. 7 is a flowchart illustrating a method of performing NTT and INTT using a circuit having merged pipeline and parallel butterfly operator circuits according to an example embodiment.

FIG. 8 is a block schematic diagram of a computer system to implement one or more example embodiments.

**DETAILED DESCRIPTION**

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

Number Theoretic Transform (NTT) is a technique that efficiently multiplies coefficients of polynomials for more robust cryptographic functions. NTT works by multiplying two polynomials and then calculating the coefficients of the resultant polynomials under a specific modulo. NTT is an efficient method for multiplying two polynomials with high degrees and integer coefficients. This is due to its advantages in terms of algorithm and implementation.

Different designs to accelerate NTT computations include the use of pipelined architectures and parallel architectures. Pipelined architectures increase circuitry area required to implement them due to data dependencies between NTT stages. Parallel architectures can adversely increase memory access overhead for providing polynomial coefficients for execution.

An improved accelerator for NTT operations uses a combination of pipelining and parallelism to improve performance and efficiency of computation. Memory access overhead is reduced by including registers between sets of computation stages to efficiently provide intermediate calculations.

A description of NTT/INTT is now provided and is followed by a description butterfly circuits and polynomial coefficient data processing flow description that illustrates efficiency of an NTT/INTT accelerator utilizing a combination of a pipelined and parallel architecture.

Let $q$ be a prime number and $\mathbb{Z}_q$ be the ring of integers modulo q. Define the ring of polynomials for some integer $N$ as $R_q = \mathbb{Z}_q[X]/(X^N + 1)$, where the polynomials have n coefficients, each modulo q. Regular font lowercase letters (*a*) represent single polynomials, bold lowercase letters (***a***) represent polynomial vectors, and bold uppercase letters (A) to represent a matrix of polynomials. Representations in the NTT domain are represented by (*â*), (***â***) and (***Â***), respectively. Let ***a*** and ***b*** be polynomial vectors in $R_q$. Let $\boldsymbol{a} \circ \boldsymbol{b} \in R_q$ denote coefficient-wise multiplication of polynomials. The∘product of a matrix and a vector is the natural extension of coefficient-wise multiplication of the polynomial vectors.

A naive method of polynomial multiplication has $O(n^2)$ complexity. This complexity can be reduced by using NTT. To multiply two polynomials efficiently in lattice-based cryptography, the polynomial rings of the form $R_q = \mathbb{Z}_q[X]/(X^N + 1)$ can be used, where ($X^N$ + 1) enables fast polynomial division. The NTT transform maps polynomials to the NTT domain at the cost of $O(n * logn)$ where multiplying their coefficients results in a polynomial that corresponds to the product of the original polynomials modulo $q$ and ($X^N$ + 1). Coefficient-wise multiplication has a complexity of $O(n)$. A total time complexity is thus $O(n \cdot log\ n)$.

The NTT is a generalization of a fast Fourier transform (FFT) defined in a finite field. Suppose $f$ is a polynomial of degree $n$ with coefficients in $\mathbb{Z}_q$, as:

$$f = \sum_{i=0}^{n-1} f_i X^i$$

FFT uses the twiddle factor $\omega_n$ n-th root of unity of form $e^{2\pi j/n}$, while NTT has $\omega_n \in \mathbb{Z}_q$ such that $\omega_n$ be a primitive n-th root of unity modulo $q$, i.e. $\omega_n^n = 1\ mod\ q$. The NTT transforms $f$, i.e., $\hat{f} = NTT(f)$, is computed as follows for each i ∈ {0,1,...,$n$ - 1}:

$$\hat{f}_i = \sum_{j=0}^{n-1} f_j \omega_n^{ij}$$

The INTT recovers $f$ from $\hat{f}$ as:

$$f_i = \sum_{j=0}^{n-1} \hat{f}_j \omega_n^{-ij}$$

Hence, the multiplication between two polynomials $f$ and g using NTT can be performed as:

$$f.g = INTT(NTT(f) \circ NTT(g))$$

NTT and inverse NTT (INTT) operations can be accomplished iteratively. NTT and INTT can be performed by applying a sequence of "butterfly operations" on the input polynomial coefficients. Butterfly operations are arithmetic operations that combine or operate on two coefficients of polynomials to obtain two outputs. The NTT and INTT operations can be computed in a logarithmic number of steps using repeated butterfly operations.

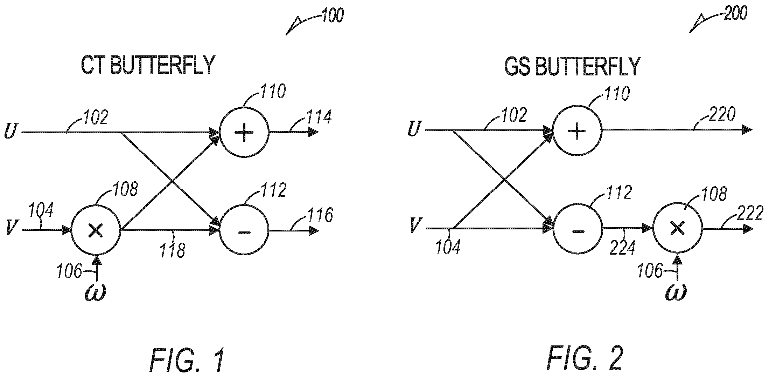

Cooley-Tukey (CT) and Gentleman-Sande (GS) butterfly configurations can be used to facilitate NTT/INTT computation. A commonly required bit-reverse function reverses the bits of the coefficient index. However, the bit-reverse permutation can be skipped by using CT butterfly operations for NTT and GS butterfly operations for INTT. FIGS. 1 and 2 illustrate a CT butterfly operator and the GS butterfly operator, respectively.

FIG. 1 illustrates, by way of example, a conceptual circuit diagram of an embodiment of a CT butterfly operator circuit 100. The circuit 100 performs the mathematical operations the CT butterfly operation. The circuit 100 takes, as input U 102 and V 104, which are coefficients of respective polynomials, and $\omega$ 106, which is a weight. V 104 and $\omega$ 106 are modular multiplied (V * $\omega$ mod q) using a modular multiplier 108. A result 118 of the multiplication performed by the modular multiplier 108 and U 102 are added using a modular adder 110 to generate a first output coefficient 114. The result 118 and U 102 are subtracted using a modular subtractor 112 to generate a second output coefficient 116. The first and second output coefficients 114 and 116 can then be used as inputs in a next iteration of circuit 100 operation.

Pseudocode for an iterative NTT operation using the CT butterfly operator circuit 100 is provided:

### In-Place NTT Algorithm using CT Butterfly Operator Circuit

Require: $a(x) \in R_q, \omega_n \in \mathbb{Z}_q, n = 2^l$

Ensure: $\hat{a}(x) = NTT(a) \in R_q$

1: $\hat{a} \leftarrow bit - reverse(a)$

2: for i from 1 to $l$ do

3:     $m = 2^{l-i}$

4:     for $j$ from 0 to $2^{i-1}$-1 do

5:         $W \leftarrow \omega_n^{1+j}$

6:         for $k$ from 0 to $m$-1 do

7:             $U \leftarrow \hat{a}[2jm + k]$

8:             $V \leftarrow \hat{a}[2jm + k + m] \, mod \, q$

9:             $T \leftarrow V \cdot W$

10:             $\hat{a}[2jm + k] = U + T \, mod \, q$

11:             $\hat{a}[2jm + k + m] = U - T \, mod \, q$

12:         end for

13:     end for

14: end for

15: return $\hat{a}(x) \in R_q$

FIG. 2 illustrates, by way of example, a conceptual circuit diagram of an embodiment of a GS butterfly operator circuit 200. The circuit 200 performs the mathematical operations for the GS butterfly operation. The circuit 200 takes, as input U 102, V 104, and $\omega$ 106. U and V are added mod q, by modular adder 110, resulting in a first output coefficient 220. U 102 and V 104 are subtracted mod q, by modular subtractor 112, resulting in result 224. The result 224 is then multiplied by a weight or twiddle factor, $\omega$ 106, using a modular multiplier 108. A result of the multiplication performed by the modular multiplier 108 is a second output coefficient 222. The first and second output coefficients 220 and 222 can then be used as inputs in a next iteration of circuit 200 operation.

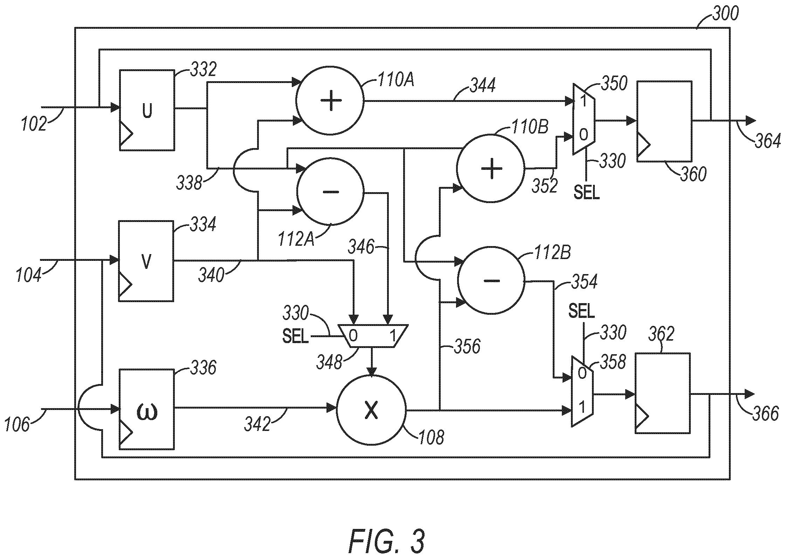

FIG. 3 illustrates, by way of an example, a circuit diagram of a general purpose butterfly operator circuit 300. The circuit 300 can perform CT butterfly operations or GS butterfly operations based on the state of a select signal 330. The circuit 300 as illustrated includes modular adders 110A, 110B, modular subtractors 112A, 112B, registers 332, 334, 336, 360, 362, multiplexers 348, 350, 358, and a modular multiplier 108. The circuit 300 while operating in CT mode is described, followed by description of the circuit 300 while operating in GS mode. When in CT mode, the select signal 330, in the example of FIG. 3, is set to zero (0). The logic of the select signal is not important and the select signal could equivocally be one (1) to place the circuit 300 into GS mode.

In either CT or GS mode, registers 332, 334, 336 store U 102, V 104, and $\omega$ 106, respectively. On a next clock cycle, each of the registers 332, 334, 336 will provide new outputs 338, 340, and 342, respectively, to the modular adder 110A, 110B, modular subtractor 112A, 112B, multiplexer 348, and modular multiplier 108. In CT mode, the modular adder 110A and the modular subtractor 112A are not relevant. Likewise, in GS mode, the modular adder 110B and the subtractor 112B are not relevant. Thus, the circuit 300 can be implemented with a single adder and a single subtractor. The circuit 300 is illustrated as including two adders and two subtractors, just for ease of understanding and ease of illustration.

In CT mode, the select signal 330 is zero. The modular multiplier 108 receives the output of the $\omega$ register 336 and provides a relevant twiddle factor, $\omega$ 106, to the modular multiplier 108. The multiplexer 348 provides output 340 of the register 334 to the multiplier 108. The modular multiplier 108 multiplies the inputs to produce result 356.

Modular adder 110B receives output 338 of the register 332 and the result 356. The modular adder 110B sums the output 338 and the result 356 and provides a result 352 to the multiplexer 350. The multiplexer 350 provides the result 352 to the output register 360. The output register 360 provides the result 352 as a first coefficient 364 during the next clock cycle.

The result 356 is subtracted, by modular subtractor 112B, from output 338 of the register 332. A result 354 of the subtraction is provided by multiplexer 358 to output register 362. The register 362 provides the result 354 as a second coefficient 366 during a next clock cycle.

In GS mode, the select signal 330 is one. The modular multiplier 108 receives the output of the $\omega$ register 336 which provides a relevant twiddle factor 342. The multiplexer 348 provides output 340 of the modular subtractor 112A to the modular multiplier 108. The modular subtractor 112A determines a difference between the output 338 of the register 332 and the output 340 of the register 334 as result 346. The modular multiplier 108 multiplies the inputs to produce result 356 which is different from the result when the circuit 300 is in CT mode.

Modular adder 110A receives output 338 of the register 332 and output 340 of the register 334. The modular adder 110A sums the outputs 338 and 340 and provides a result 344 to the multiplexer 350. The multiplexer 350 provides the result 344 to the output register 360. The output register 360 provides the result 344 as a first coefficient 364 during the next clock cycle.

The result 356 is provided by multiplexer 358 to output register 362. The register 362 provides the result 354 as a second coefficient 366 during a next clock cycle.

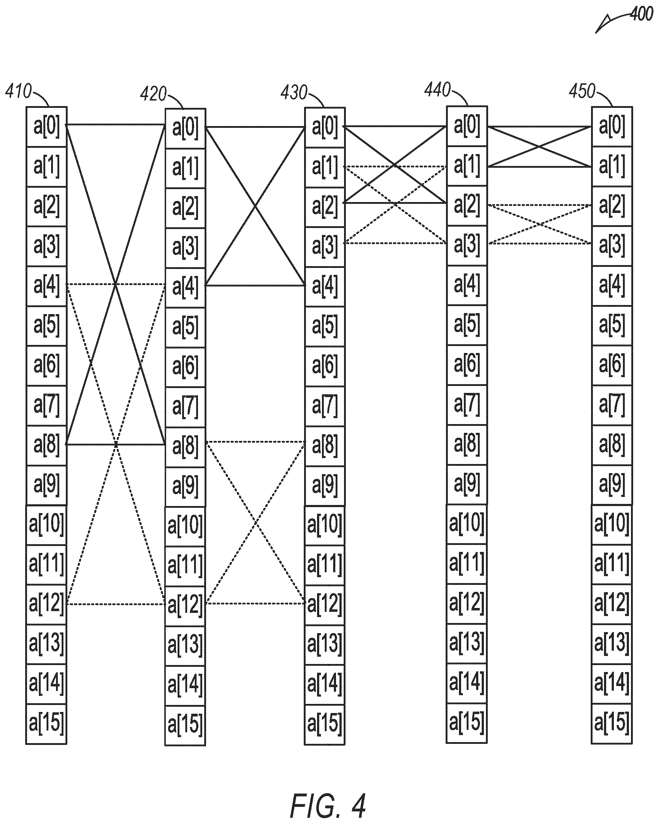

FIG. 4 is a diagram illustrating data flow via stages generally at 400 for an NTT computation of a portion of an N point or coefficient polynomial using CT butterfly operations (using one or more instances of the butterfly operator circuit of FIG. 1). For example, N is set to 16. In further examples, N may be any power of 2, such as 256 or 1024. Even powers of two may be used to optimize performance of an accelerator circuit described below.

The coefficients for N=16 are labeled $a(0)$ to $a(15)$. At a first stage 410, in a first cycle, four coefficients, $a(0)$, $a(4)$, $a(8)$, and $a(12)$ are provided for execution by two parallel butterfly circuits. One of the circuits processes $a(0)$ and $a(8)$, generating outputs to be processed by a second stage 420. The other parallel circuit processes $a(4)$ and $a(12)$, generating outputs to be processed by second stage 420.

Second stage 420 also includes two parallel butterfly circuits coupled to receive a mix of the outputs of the first stage 410 butterfly circuits such that two sets of inputs comprising the corresponding outputs of the first stage 410 butterfly circuits, are processed. One butterfly circuit of stage two processes $a(0)$ and $a(4)$ that are output from stage one and the other processes $a(8)$ and $a(12)$ that are output from stage one. Outputs are shown as inputs to a third stage 430. One advantage of arranging the first and second stages as shown are that one memory access may be performed to obtain the coefficients used by the first and second stages in the first cycle. However, as seen in FIG. 4, the third stage uses a different set of coefficients than the first two stages.

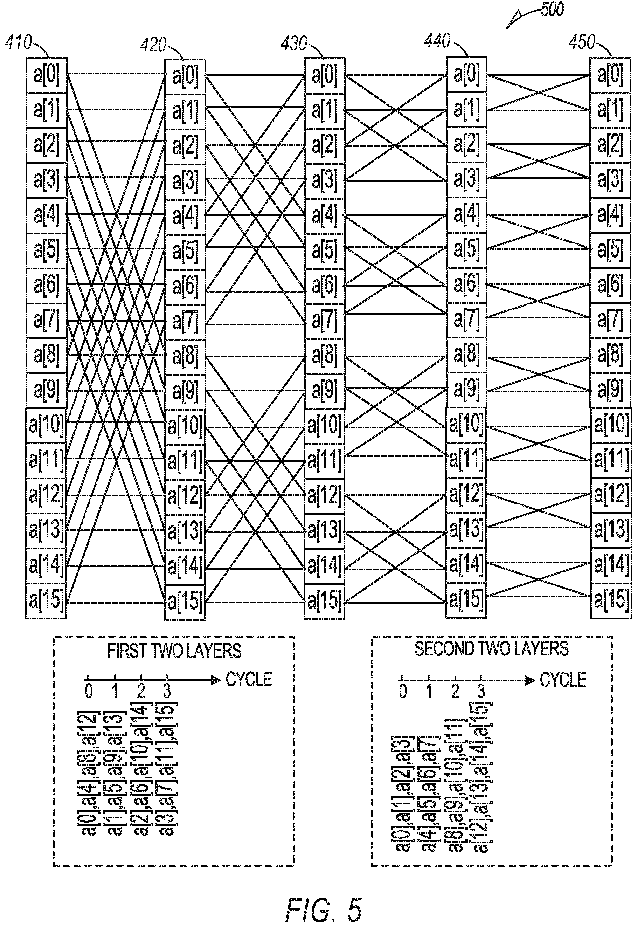

FIG. 5 illustrates a complete data flow diagram at 500. Prior to proceeding to further stages, more cycles may be performed for the first and second stages (also referred to as layers) as shown in shown in FIG. 5. The first and second stages in a first cycle, both operate based on the same set of inputs, $a(0)$, $a(4)$, $a(8)$, and $a(12)$. A second cycle operates on inputs $a(1)$, $a(5)$, $a(9)$, and $a(13)$. A third cycle operates on inputs $a(2)$, $a(6)$, $a(10)$, and $a(14)$, and a further cycle operates on inputs $a(3)$, $a(7)$, $a(11)$, and $a(15)$. Upon completion of the four cycles, the output of the second stage 420 includes sufficient coefficients to proceed to the third stage 430 which utilizes the coefficients output from the second stage 420.

Third stage 430 in a first cycle operates on $a(0)$ and $a(2)$ via one butterfly operator circuit, and $a(1)$ and $a(3)$ via parallel butterfly operator circuit. A fourth stage 440 operates on the outputs of the third stage 430 including $a(0)$ and $a(1)$ via one butterfly operator circuit and $a(2)$ and $a(3)$ via another parallel butterfly operator circuit, providing a final output 450. The output 450 will be in either an NTT domain or an INTT domain depending on how the butterfly circuits are controllably configured. The third stage 430 and fourth stage 440 operate on the coefficients with the same indices for a cycle that are derived from the first set of stages, first stage 410 and second stage 420, once their operations are completed for all cycles. Once the operations of the third stage 430 and fourth stage 440 are completed, the resulting output is ready for storage.

For N=16, each of the sets of stages will perform N/4 or four cycles. For larger N, multiple runs of the stages may be used with consecutive sets of four coefficients selected.

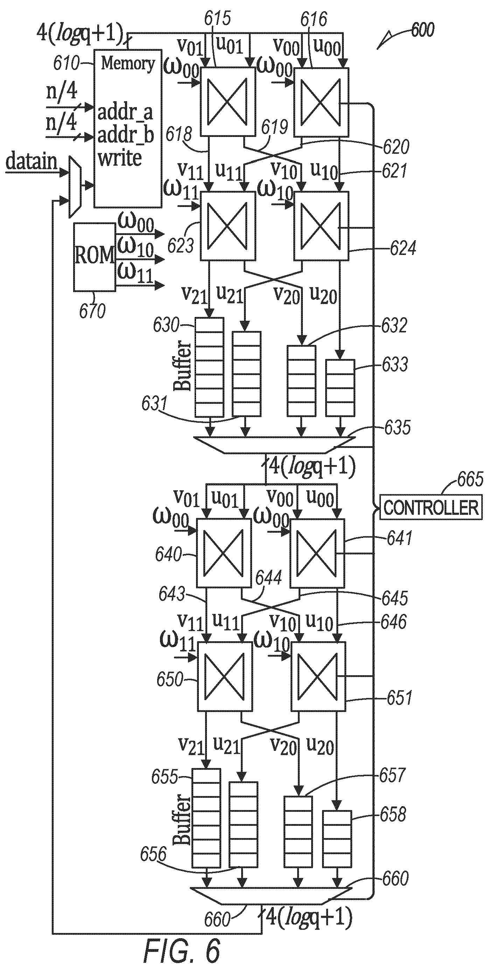

FIG. 6 illustrates, by way of example, a diagram of an embodiment of an NTT/INTT circuit 600 for N=16. The circuit 600 as illustrated includes two sets of stages for performing butterfly operations consistent with the dataflow shown at 400 and 500 in FIGs 4 and 5.

Circuit 600 includes or is coupled to a memory 610. Memory 610 stores coefficients of polynomials to be converted to the NTT domain, multiplied in the NTT domain, and then converted back from the NTT domain using INTT.

The memory 610 is coupled to a first stage of parallel butterfly circuits 615 and 616 that are coupled to receive selected coefficients over multiple cycles. Butterfly circuit 615 has outputs 618 and 619. Butterfly circuit 616 has outputs 620 and 621.

The first stage of butterfly circuits 615 and 616 have their outputs coupled in serial to a second stage of parallel butterfly circuits 623 and 624. Output 618 is coupled to a first input of butterfly circuit 623 and output 620 is coupled to a second input of butterfly circuit 623. Output 619 is coupled to a first input of butterfly circuit 624 and output 621 is coupled to a second input of butterfly circuit 624. The connection of the outputs effectively switches coefficients between the first and second stages to achieve the data flow described with respect to FIGs. 4 and 5 over the multiple cycles. In one example, the connection may be referred to as a cross connection that follows each stage such that the stages exchange one of the coefficients from each butterfly operator circuit.

Outputs of butterfly circuits 623 and 624 are coupled to a set of four buffers 630, 631, 632, and 633. The buffers in one example may be shift registers with serial-in, parallel-out (SIPO) configuration. The buffers may have different depth in one example. Depths of 4, 5, 6, and 7 are used for the dual stage configuration regardless of the value of N. The buffers are configured to provide results from the first set of stages, first stage of butterfly circuits 615, 616 and second stage of butterfly circuits 623 and 624 to further stages of butterfly circuits via a multiplexor 635.

The multiplexor 635 routes the output of the second stage of butterfly circuits for all the cycles of the first two stages that operate on all the polynomial coefficients. Buffering enables further processing of the NTT or INTT without having to access memory 610 a second time. Multiplexor 635 is coupled to a third stage of parallel butterfly circuits 640 and 641 that are coupled to receive selected coefficients over multiple cycles. Butterfly circuit 640 has outputs 643 and 644. Butterfly circuit 641 has outputs 645 and 646.

The third stage of butterfly circuits 640 and 641 have their outputs coupled in serial to a second stage of parallel butterfly circuits 650 and 651. Output 643 is coupled to a first input of butterfly circuit 644 and output 645 is coupled to a second input of butterfly circuit 644. Output 644 is coupled to a first input of butterfly circuit 651 and output 646 is coupled to a second input of butterfly circuit 646. The connection of the outputs effectively switches coefficients between the third and fourth stages to achieve the data flow described with respect to FIGs. 4 and 5 over the multiple cycles.

Outputs of butterfly circuits 650 and 651 are coupled to a set of four buffers 655, 656, 657, and 658. The buffers in one example may be shift registers with serial-in, parallel-out (SIPO) configuration. The buffers may have different depth in one example. The buffers are configured to provide results from the second set of stages, third stage of butterfly circuits 640, 641 and fourth stage of butterfly circuits 650 and 651 to memory 610 via a multiplexor 660 as the transform of the input, either NTT or INTT. Such results may be provided once the operations of the third and fourth stages are complete.

A controller 665 is coupled to control the butterfly circuits to operate in either the NTT or INTT mode. Controller 665 also controls the multiplexors to provide results from each stage of butterfly circuits to succeeding butterfly circuit stages or to memory 610 as output. A further memory, such as read only memory (ROM) 670 is also controlled by controller 665 to provide twiddle factors to each of the butterfly circuits. ROM 670 provides the proper twiddle factor, $\omega$, for each butterfly operator circuit. Controller 665 also controls read and write operations of memory 610 to both provide selected sets of coefficients to the first stage of butterfly circuits 615 and 616 as well as writing output from multiplexor 660 into memory.

In one example, the storage of coefficients in memory 610 may be arranged to efficiently provide coefficients for each cycle. As show in FIGs. 4 and 5, coefficients are not provided in sequential order. The first four coefficients for the first cycle, $a(0)$, $a(4)$, $a(8)$, and $a(12)$, are stored at a first memory address, addr_a. One memory cycle provides all four of the coefficient to the first stage of butterfly circuits 615 and 617. Similarly, coefficients $a(1)$, $a(5)$, $a(9)$, and $a(13)$ may be stored at addr_b. Each succeeding set of coefficients needed for succeeding cycles may be stored at succeeding addresses. For N=16, only four reads of memory 610 will provide all the coefficients need to perform the transform.

Circuit 600 may be used to operate on different values of N. Each round of NTT involves n/4 read and store operations that are fully pipelined to improve throughput. The pipeline latency between read and write sequences is 2 cycles for reading from memory, 8 cycles for each of two-merged stages of butterfly operations, and 4 cycles for buffering the results in registers for the first write operation. For a complete NTT operation with 8 layers, i.e., n = 256, circuit 600 will take $\frac{8}{4} = 2$ rounds. Each round involves $\frac{256}{4} = 64$ operations in pipelined architecture. Hence, the latency of each round is equal to $64 + 2 + 8 \times 2 + 4 \times 2 = 90$ cycles. The total latency would be $2 \times 90 = 180$ cycles. Considering the operation frequency of 500 MHz for the architecture, the throughput of the architecture would be 2,777K operation/second.

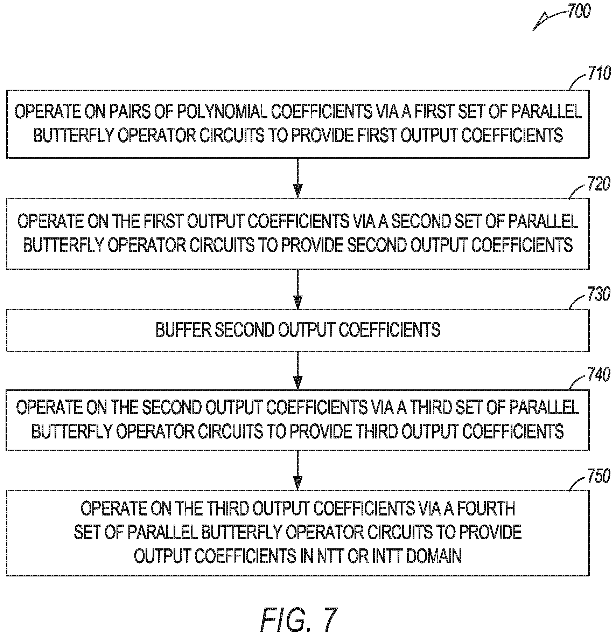

FIG. 7 is a flowchart illustrating a method 700 of performing NTT and INTT cryptographic operations using an accelerator having merged pipeline and parallel butterfly operator circuits. Method 700 begins at operation 710 by operating on pairs of polynomial coefficients via a first set of parallel butterfly operator circuits each butterfly operator circuit configured to operate on the pairs of polynomial coefficients to provide first output coefficients. Operation 720 operates on pairs of coefficients of first output coefficients via a second set of parallel butterfly operator circuits to provide second output coefficients. Operation 730 buffers the second output coefficients.

Pairs of coefficients of the second output coefficients are operated on via a third set of parallel butterfly operator circuits at operation 740 to provide third output coefficients. A multiplexor may be used to select pairs of coefficients of the second output coefficients to provide the third set or parallel butterfly operator circuits in accordance with NTT.

Operation 750 operates on pairs of the third output coefficients via a fourth set of parallel butterfly operator circuits to provide output coefficients of the polynomial in a number theoretic transform (NTT) domain or out of the NTT domain.

Each butterfly circuit comprise an adder, a subtractor, and a multiplier that are reconfigurable to perform NTT or inverse NTT (INTT). In one example, the butterfly operator circuits are configured as Cooley-Tukey (CT) butterfly operator circuits or Gentleman-Sande (GS) butterfly operator circuits. Before buffering and combining pairs of coefficients from an output butterfly operator circuit, an order of the pairs of output coefficients are rearranged.

The polynomial has $n$ coefficients and wherein $n/4$ cycles of the method are performed. Each butterfly operator circuit receives a first coefficient, a second coefficient, and a respective twiddle factor. A multiplexer may be used to provide selected coefficients of the buffered second output coefficients to the third set of butterfly operator circuits.

To perform a full transform, multiple cycles of the accelerator may be used to operate on all the pairs of polynomial coefficients for a given polynomial. Coefficients to be transformed are received for each cycle from a memory storing the coefficients such that one memory access provides the coefficients for each cycle.

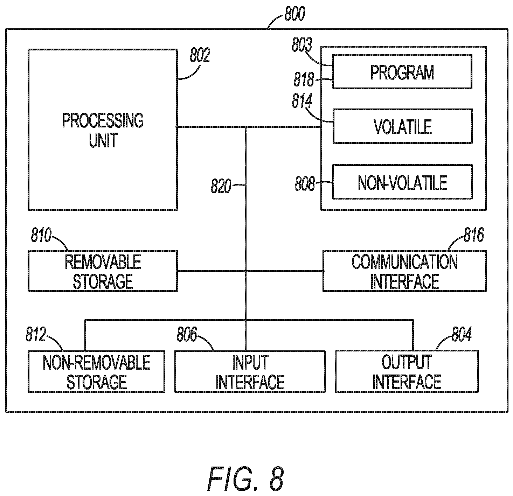

FIG. 8 is a block schematic diagram of a computer system 800 to implement a controller and memory, and for performing methods and algorithms according to example embodiments. All components need not be used in various embodiments.

One example computing device in the form of a computer 800 may include a processing unit 802, memory 803, removable storage 810, and non-removable storage 812. Although the example computing device is illustrated and described as computer 800, the computing device may be in different forms in different embodiments. For example, the computing device may instead be a smartphone, a tablet, smartwatch, smart storage device (SSD), or other computing device including the same or similar elements as illustrated and described with regard to FIG. 8. Devices, such as smartphones, tablets, and smartwatches, are generally collectively referred to as mobile devices or user equipment.

Although the various data storage elements are illustrated as part of the computer 800, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 803 may include volatile memory 814 and non-volatile memory 808. Computer 800 may include - or have access to a computing environment that includes - a variety of computer-readable media, such as volatile memory 814 and non-volatile memory 808, removable storage 810 and non-removable storage 812. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 800 may include or have access to a computing environment that includes input interface 806, output interface 804, and a communication interface 816. Output interface 804 may include a display device, such as a touchscreen, that also may serve as an input device. The input interface 806 may include one or more of a touchscreen, touchpad, mouse, keyboard, camera, one or more device-specific buttons, one or more sensors integrated within or coupled via wired or wireless data connections to the computer 800, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 800 are connected with a system bus 820.

Computer-readable instructions stored on a computer-readable medium are executable by the processing unit 802 of the computer 800, such as a program 818. The program 818 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 818 along with the workspace manager 822 may be used to cause processing unit 802 to perform one or more methods or algorithms described herein.

Examples:

1. A cryptographic accelerator includes a first stage of parallel butterfly operator circuits, each of the butterfly operator circuits configured to operate on pairs of polynomial coefficients to provide first output coefficients, a second stage of parallel butterfly operator circuits, each of the butterfly operator circuits configured to operate in a pipelined manner on pairs of coefficients of the first output coefficients to provide second output coefficients, a first buffer coupled to store the second output coefficients, a third stage of parallel butterfly operator circuits, each configured to operate on pairs of coefficients of the second coefficient output to provide third output coefficients, and a fourth stage of parallel butterfly operator circuits, each configured to operate in a pipelined manner on pairs of coefficients of the third output coefficients to provide coefficients of the polynomial in a number theoretic transform (NTT) domain or out of the NTT domain.

2. The accelerator of example 1 wherein each stage has two butterfly operator circuits configurable as Cooley-Tukey (CT) butterfly operator circuits or Gentleman-Sande (GS) butterfly operator circuits.

3. The accelerator of any of examples 1-2 and further including a second buffer coupled to the fourth stage to receive the coefficients of the polynomial in NTT or out of the NTT domain.

4. The accelerator of any of examples 1-3 and further including a cross connection following each stage exchanges one of the coefficients from each butterfly operator circuit.

5. The accelerator of any of examples 1-4 and further including a multiplexor coupled between first buffer and the third stage to select pairs of coefficients of the second coefficient output to provide to third set in accordance with NTT.

6. The accelerator of any of examples 1-5 and further including a memory coupled to provide successive sets of four coefficients to the accelerator in cycles, each successive set stored in the memory to provide selected coefficients for a cycle in one memory access.

7. The accelerator of any of examples 1-6 and further including a twiddle factor memory coupled to provide twiddle factors to the butterfly operator circuits.

8. The accelerator of any of examples 1-7 and further including a controller coupled to configure each butterfly operator circuit as Cooley-Tukey (CT) butterfly operator circuits or Gentleman-Sande (GS) butterfly operator circuits to perform NTT or inverse NTT (INTT).

9. The accelerator of example 8 wherein the controller is coupled to a memory device to control access to the memory device to provide a selected set of coefficients for each cycle of multiple cycles of the first stage.

10. The accelerator of any of examples 8-9, wherein the butterfly operator circuits each include a modular adder, a modular subtractor, and a modular multiplier.

11. A method of accelerating cryptographic operations, the method including, operating on pairs of polynomial coefficients via a first set of parallel butterfly operator circuits each butterfly operator circuit configured to operate on the pairs of polynomial coefficients to provide first output coefficients, operating on pairs of coefficients of first output coefficients via a second set of parallel butterfly operator circuits to provide second output coefficients, buffering the second output coefficients, operating on pairs of coefficients of the second output coefficients via a third set of parallel butterfly operator circuits to provide third output coefficients, and operating on pairs of the third output coefficients via a fourth set of parallel butterfly operator circuits to provide output coefficients of the polynomial in a number theoretic transform (NTT) domain or out of the NTT domain.

12. The method of example 11, wherein the butterfly operator circuits are configured as Cooley-Tukey (CT) butterfly operator circuits or Gentleman-Sande (GS) butterfly operator circuits.

13. The method of any of examples 11-12, further including before buffering and combining pairs of coefficients from an output coefficient, rearranging, an order of the coefficients.

14. The method of any of examples 11-13, wherein the polynomial has n coefficients and wherein $n/4$ cycles of the method are performed.

15. The method of any of examples 11-14, wherein each butterfly operator circuit receives a first coefficient, a second coefficient, and a respective twiddle factor.

16. The method of any of examples 11-15, further including providing, by a multiplexer, selected coefficients of the buffered second output coefficients to the third set of butterfly operator circuits.

17. The method of any of examples 11-16 wherein pairs of polynomial coefficients operated on via the first set of parallel butterfly operator circuits are received for each cycle of the method from a memory storing the coefficients such that one memory access provides the coefficients for each cycle.

18. The method of any of examples 11-17, wherein the butterfly operator circuits each include an adder, a subtractor, and a multiplier that are reconfigurable to perform NTT or inverse NTT (INTT).

19. The method of any of examples 11-18 and further including using a multiplexor to select pairs of coefficients of the second output coefficients to provide the third set in accordance with NTT.

20. A cryptographic accelerator including a first stage of parallel butterfly operator circuits each butterfly operator circuits configured to operate on pairs of polynomial coefficients to provide a first output coefficients, a memory coupled to provide to the first stage, sets of four coefficients corresponding to cycles stored to provide selected coefficients for a cycle in one memory access, a second stage of parallel butterfly operator circuits, each butterfly operator circuits configured to operate on pairs of coefficients of the first output coefficients to provide second output coefficients, a first buffer coupled to store the second output coefficients, a third stage of parallel butterfly operator circuits, each butterfly operator circuits configured to operate on pairs of second output coefficients to provide third output coefficients, a fourth stage of parallel butterfly operator circuits, each butterfly operator circuits configured to operate on pairs of third output coefficients to provide coefficients of the polynomial in a number theoretic transform (NTT) domain or out of the NTT domain, and a controller coupled to control the butterfly operator circuits to operate as Cooley-Tukey (CT) butterfly operator circuits or Gentleman-Sande (GS) butterfly operator circuits to perform NTT or inverse NTT (INTT).

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

**Claims**

1. A cryptographic accelerator (600) comprising:

   a first stage of parallel butterfly operator circuits (615, 616), each of the butterfly operator circuits configured to operate on pairs of polynomial coefficients to provide first output coefficients;
   a second stage of parallel butterfly operator circuits (623, 624), each of the butterfly operator circuits configured to operate in a pipelined manner on pairs of coefficients of the first output coefficients to provide second output coefficients;
   a first buffer (630, 631, 632, 633) coupled to store the second output coefficients;
   a third stage of parallel butterfly operator circuits (640, 641), each configured to operate on pairs of coefficients of the second coefficient output to provide third output coefficients; and
   a fourth stage of parallel butterfly operator circuits (650, 651), each configured to operate in a pipelined manner on pairs of coefficients of the third output coefficients to provide coefficients of the polynomial in a number theoretic transform, NTT, domain or out of the NTT domain.

2. The accelerator of claim 1 wherein each stage has two butterfly operator circuits configurable as Cooley-Tukey, CT, butterfly operator circuits (100) or Gentleman-Sande, GS, butterfly operator circuits (200).

3. The accelerator of claim 1 and further comprising a second buffer (655, 656, 657, 658) coupled to the fourth stage to receive the coefficients of the polynomial in NTT or out of the NTT domain.

4. The accelerator of claim 1 and further comprising a cross connection (618, 619, 620, 621, 643, 644, 645, 646) following each stage exchanges one of the coefficients from each butterfly operator circuit.

5. The accelerator of claim 1 and further comprising a multiplexor (635) coupled between first buffer and the third stage to select pairs of coefficients of the second coefficient output to provide to third set in accordance with NTT.

6. The accelerator of claim 1 and further comprising a memory (610) coupled to provide successive sets of four coefficients to the accelerator in cycles, each successive set stored in the memory to provide selected coefficients for a cycle in one memory access.

7. The accelerator of claim 1 and further comprising a twiddle factor memory (670) coupled to provide twiddle factors to the butterfly operator circuits.

8. The accelerator of any one of claims 1-7 and further comprising a controller (665) coupled to configure each butterfly operator circuit as Cooley-Tukey, CT, butterfly operator circuits or Gentleman-Sande, GS, butterfly operator circuits to perform NTT or inverse NTT, INTT.

9. The accelerator of claim 8 wherein the controller is coupled to a memory device to control access to the memory device to provide a selected set of coefficients for each cycle of multiple cycles of the first stage.

10. The accelerator of claim 8, wherein the butterfly operator circuits each comprise a modular adder (110), a modular subtractor (112), and a modular multiplier (108).

11. A method (700) of accelerating cryptographic operations, the method comprising:

   operating (710) on pairs of polynomial coefficients via a first set of parallel butterfly operator circuits each butterfly operator circuit configured to operate on the pairs of polynomial coefficients to provide first output coefficients;
   operating (720) on pairs of coefficients of first output coefficients via a second set of parallel butterfly operator circuits to provide second output coefficients;
   buffering (730) the second output coefficients;
   operating (740) on pairs of coefficients of the second output coefficients via a third set of parallel butterfly operator circuits to provide third output coefficients; and
   operating (750) on pairs of the third output coefficients via a fourth set of parallel butterfly operator circuits to provide output coefficients of the polynomial in a number theoretic transform, NTT, domain or out of the NTT domain.

12. The method of claim 11, further comprising before buffering and combining pairs of coefficients from an output coefficient, rearranging, an order of the coefficients.

13. The method of claim 11, wherein the polynomial has n coefficients and wherein n/4 cycles of the method are performed.

14. The method of claim 11, wherein each butterfly operator circuit receives a first coefficient, a second coefficient, and a respective twiddle factor.

15. The method of any one of claims 11-14 wherein pairs of polynomial coefficients operated on via the first set of parallel butterfly operator circuits are received for each cycle of the method from a memory storing the coefficients such that one memory access provides the coefficients for each cycle.

CT BUTTERFLY

GS BUTTERFLY

FIG. 1

FIG. 2

FIG. 3

FIG. 4

FIG. 5

FIG. 6

```
┌──────────────────────────────────────────────────────────────────┐ ⌐710
│ OPERATE ON PAIRS OF POLYNOMIAL COEFFICIENTS VIA A FIRST SET OF      │
│ PARALLEL BUTTERFLY OPERATOR CIRCUITS TO PROVIDE FIRST OUTPUT        │
│ COEFFICIENTS                                                       │
└──────────────────────────────────────────────────────────────────┘
                              ↓
┌──────────────────────────────────────────────────────────────────┐ ⌐720
│ OPERATE ON THE FIRST OUTPUT COEFFICIENTS VIA A SECOND SET OF        │
│ PARALLEL BUTTERFLY OPERATOR CIRCUITS TO PROVIDE SECOND OUTPUT       │
│ COEFFICIENTS                                                       │
└──────────────────────────────────────────────────────────────────┘
                              ↓
┌──────────────────────────────────────────────────────────────────┐ ⌐730
│ BUFFER SECOND OUTPUT COEFFICIENTS                                   │
└──────────────────────────────────────────────────────────────────┘
                              ↓
┌──────────────────────────────────────────────────────────────────┐ ⌐740
│ OPERATE ON THE SECOND OUTPUT COEFFICIENTS VIA A THIRD SET OF        │
│ PARALLEL BUTTERFLY OPERATOR CIRCUITS TO PROVIDE THIRD OUTPUT        │
│ COEFFICIENTS                                                       │
└──────────────────────────────────────────────────────────────────┘
                              ↓
┌──────────────────────────────────────────────────────────────────┐ ⌐750
│ OPERATE ON THE THIRD OUTPUT COEFFICIENTS VIA A FOURTH               │
│ SET OF PARALLEL BUTTERFLY OPERATOR CIRCUITS TO PROVIDE              │
│ OUTPUT COEFFICIENTS IN NTT OR INTT DOMAIN                           │
└──────────────────────────────────────────────────────────────────┘
```

*FIG. 7*

FIG. 8

Europäisches
Patentamt

European
Patent Office

Office européen
des brevets

# EUROPEAN SEARCH REPORT

**Application Number**

EP 25 16 7900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/318829 A1 (SIM JAE YOON [KR] ET AL) 5 October 2023 (2023-10-05) | 1-12,15 | INV. G09C1/00 |
| Y | * paragraphs [0027], [0069], [0080] - [0085], [0089] - [0094]; figures 6-9C * | 13,14 | H04L9/30 |
| Y | WANG TENGFEI ET AL: "Efficient Implementation of Dilithium Signature Scheme on FPGA SoC Platform", IEEE TRANSACTIONS ON VERY LARGE SCALE INTEGRATION (VLSI) SYSTEMS, IEEE SERVICE CENTER, PISCATAWAY, NJ, USA, vol. 30, no. 9, 1 September 2022 (2022-09-01), pages 1158-1171, XP011918926, ISSN: 1063-8210, DOI: 10.1109/TVLSI.2022.3179459 [retrieved on 2022-06-29] * algorithms 4 and 5 section I * | 13,14 | |
| A | ITABASHI YUMA ET AL: "Efficient Modular Polynomial Multiplier for NTT Accelerator of Crystals-Kyber", 2022 25TH EUROMICRO CONFERENCE ON DIGITAL SYSTEM DESIGN (DSD), IEEE, 31 August 2022 (2022-08-31), pages 528-533, XP034266492, DOI: 10.1109/DSD57027.2022.00076 [retrieved on 2023-01-04] * section III; figures 3,4 * | 1-15 | **TECHNICAL FIELDS SEARCHED (IPC)** G09C H04L |

The present search report has been drawn up for all claims

| Place of search | Date of completion of the search | Examiner |
|---|---|---|
| Munich | 17 September 2025 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7900

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2025

| Patent document cited in search report | Publication date | Patent family member(s) | Publication date |
|---|---|---|---|
| US 2023318829 A1 | 05-10-2023 | KR 20230141045 A | 10-10-2023 |
| | | US 2023318829 A1 | 05-10-2023 |

For more details about this annex : see Official Journal of the European Patent Office, No. 12/82

EPO FORM P0459